# FASCICULE DE BREVET EUROPEEN

(11) **EP 1 236 641 B1**
(45) Date de publication et mention de la délivrance du brevet: **17.03.2004**
(21) Numéro de dépôt: 02290329.8
(22) Date de dépôt: 11.02.2002
(51) Int. Cl.: B64C 23/06, F15D 1/00

(54) **Procédé et dispositif pour accélerer la destruction d'au moins deux vortex dans le sillage d'un mobile, en particulier d'un avion**
Vorrichtung und Verfahren zur Beschleunigung der Zerstörung von zumindest zwei Wirbelschleppen, insbesondere hinter einem Flugzeug
Device and method for accelerating the destruction of at least two wake vortices, in particular aircraft wake vortices

(30) Priorité: 01.03.2001 FR 0102804
(43) Date de publication de la demande: 04.09.2002
(73) Titulaire: AIRBUS FRANCE, 31060 Toulouse (FR); CENTRE NATIONAL DE LA RECHERCHE SCIENTIFIQUE (CNRS), 75016 Paris (FR); Société Civile Cerfacs (Centre Européen de Recherche et de Formation Avancée en Calcul Scientifique), 31000 Toulouse (FR)
(72) Inventeur: Corjon, Alexandre, 31000 Toulouse (FR); Leweke, Thomas, 13009 Marseille (FR); Laporte, Florent, 89110 Villiers sur Tholon (FR)
(74) Mandataire: Hauer, Bernard

(56) Documents cités:
- EP-A- 1 145 954
- WO-A-99/00297
- DE-A- 19 909 190
- US-A- 3 881 669
- LEWEKE T, WILLIAMSON C H K: "Cooperative elliptic instability of a vortex pair" JOURNAL OF FLUID DYNAMICS, vol. 360, 10 avril 1998 (1998-04-10), pages 85-119, XP001039832
- DOYLE A: "BOEING TECHNIQUE LEAVES TRAILING VORTICES BEHIND" FLIGHT INTERNATIONAL, REED BUSINESS INFORMATION, HAYWARDS HEATH, GB, vol. 156, no. 4700, 27 octobre 1999 (1999-10-27), page 12 XP000854006 ISSN: 0015-3710
- MEUNIER P, LEWEKE T, ABID M: "Three-dimensional instability of two merging vortices" ADVANCES IN TURBULENCE VIII, 2000, pages 15-18, XP001039909

## Description

La présente invention concerne un procédé et un dispositif pour accélérer la destruction d'au moins deux vortex dans le sillage d'un mobile.

Bien que non exclusivement, la présente invention est mise en oeuvre plus particulièrement sur un avion, notamment un avion de transport.

Dans ce cas, les deux vortex (ou plus), auxquels on applique la présente invention, sont généralement engendrés lorsque l'avion se trouve en phase de décollage ou d'atterrissage et qu'au moins un volet, en particulier un volet hypersustentateur, est déployé sur chaque aile de l'avion. Ces deux vortex sont contrarotatifs et sont créés respectivement dans le sillage desdites ailes de l'avion, chacun desdits vortex étant formé à l'arrière de l'aile correspondante par la fusion d'au moins deux tourbillons co-rotatifs, dont l'un est créé par l'extrémité de l'aile et l'autre par le volet déployé. Ces tourbillons co-rotatifs sont dus aux gradients de pression existant aux extrémités desdites surfaces portantes (extrémité d'aile, volet) entre l'intrados et l'extrados de ces surfaces portantes. Le gradient de pression contraint le fluide à effectuer un contournement de l'extrémité de la surface portante correspondante, ce qui crée un mouvement de rotation du fluide engendrant le tourbillon. En vol de croisière, il existe aussi des vortex contrarotatifs qui sont engendrés par les seules extrémités des ailes, mais un dispositif visant à accélérer leur destruction risquerait d'engendrer une traînée trop importante.

Pour éviter toute confusion, on appellera dans le cadre de la présente invention :
- "tourbillons", les phénomènes tourbillonnaires qui existent avant la fusion et qui vont fusionner ensemble ; et
- "vortex", les phénomènes tourbillonnaires obtenus par la fusion d'au moins deux de ces tourbillons.

Les deux vortex contrarotatifs qui sont créés dans le sillage de l'avion peuvent être très énergétiques et produire un champ de vitesse très déstabilisateur pour un avion suiveur (ce champ de vitesse est communément appelé "turbulence de sillage") et, en particulier, un fort moment de roulis ainsi qu'un fort mouvement descendant de l'air. De plus, ils ont une durée de vie importante (plusieurs minutes), de sorte qu'ils imposent de grandes distances de séparation entre avions au voisinage des aéroports.

Une grille de séparation fixe, basée sur la masse des avions, est actuellement utilisée pour établir les distances de séparation entre deux avions au décollage et à l'atterrissage. Le trafic aérien étant en augmentation constante, la fréquence des décollages et des atterrissages se trouve ainsi limitée dans de nombreux aéroports, par de trop grandes distances de séparation.

La présente invention a notamment pour objet d'accélérer la destruction de cette paire de vortex contrarotatifs créés dans le sillage d'un avion, en phases de décollage et d'atterrissage.

On connaît différents types de dispositifs destinés à agir sur divers tourbillons de sillage d'avions.

En particulier, par le document US-5 492 289, on connaît une méthode pour accélérer la destruction d'un tourbillon qui est créé dans le sillage d'un avion, par l'extrémité d'une aile ou d'un volet porté par une aile. Ce document connu propose de modifier le bord de fuite de l'aile ou du volet de manière à modifier la distribution de la portance le long de l'aile correspondante. Une telle modification de la portance provoque une augmentation plus rapide du diamètre du tourbillon (d'extrémité d'aile ou de volet) et accélère ainsi sa destruction. Toutefois, on peut s'interroger sur l'efficacité de cette méthode et notamment sur l'accélération effective de la destruction. De plus, cette solution connue prévoit une modification géométrique de l'aile, ce qui pose des problèmes de réalisation pratique.

En outre, par le document US-6 042 059, on connaît un système et une méthode pour détruire plus rapidement des tourbillons de sillage d'un avion. Cette méthode connue prévoit d'utiliser de petites surfaces aérodynamiques pour engendrer un tourbillon parasite destiné à initier le processus de destruction des tourbillons de sillage. Ces petites surfaces aérodynamiques sont profilées et sont agencées sur les surfaces portantes de l'avion. Elles présentent toutefois l'inconvénient d'augmenter la traînée.

Par ailleurs, par le document WO-99/00297, on connaît un système actif pour détruire des tourbillons de sillage d'un avion. Ce système connu est basé sur l'excitation active des instabilités multiples de tourbillons par les surfaces mobiles de la voilure de l'avion, sans pour autant changer la structure interne de ces tourbillons, ni exciter une instabilité interne des coeurs de ces tourbillons. Ce système actif connu est très complexe, puisqu'il implique l'utilisation d'un calculateur et de commandes synchronisées permettant le déplacement contrôlé des ailerons et des spoilers pendant le vol. De ce fait, des répercussions sur la manoeuvrabilité de l'avion, le contrôle de sa portance, les sollicitations de sa structure et le confort des passagers, sont susceptibles d'apparaître. De plus, l'efficacité de ce système connu n'a pas été démontrée.

La présente invention a pour objet de remédier aux inconvénients précités. Elle concerne un procédé pour accélérer la destruction d'au moins deux vortex contrarotatifs qui sont engendrés dans le sillage d'un mobile, en particulier dans le sillage d'un avion lorsque des volets sont déployés sur ledit avion, c'est-à-dire en phases de décollage et d'atterrissage.

A cet effet, ledit procédé pour accélérer la destruction d'une paire de vortex contrarotatifs qui sont créés respectivement dans le sillage des ailes d'un mobile muni d'au moins deux ailes, dont chaque aile est pourvue d'au moins deux surfaces portantes, et qui sont séparés l'un de l'autre d'une distance inter-vortex, chacun desdits vortex contrarotatifs étant formé à l'arrière de l'aile correspondante par la fusion d'au moins deux tourbillons co-rotatifs qui sont créés par la disposition desdites surfaces portantes de l'aile, chacun desdits tourbillons co-rotatifs présentant une pluralité de modes d'instabilité du coeur, est remarquable en ce que l'on engendre, au niveau de chacune desdites ailes, au voisinage-de la zone de création d'au moins l'un desdits tourbillons co-rotatifs de l'aile, une perturbation périodique de l'écoulement, qui correspond à une instabilité de Bénard- von Kármán, et en ce que chacune desdites perturbations périodiques présente une longueur d'onde qui est apte à exciter au moins l'un desdits modes d'instabilité du tourbillon correspondant de manière à augmenter le coeur du vortex contrarotatif qui est créé à partir de la fusion instable de ce tourbillon avec l'autre tourbillon de sorte que le diamètre dudit coeur devienne supérieur à une proportion prédéterminée de ladite distance inter-vortex.

Ainsi, grâce aux perturbations périodiques engendrées conformément à la présente invention, les rapports entre d'une part les diamètres des coeurs des deux vortex et d'autre part la distance inter-vortex deviennent supérieurs à une valeur critique prédéterminée, à partir de laquelle on aboutit à une forte interaction des deux vortex et à leur destruction rapide. En effet, comme précisé ci-dessous, lorsque cette valeur critique est atteinte, on assiste à un échange de fluide entre les deux vortex contrarotatifs avec la création de tourbillons secondaires de tailles réduites, qui sont perpendiculaires aux axes desdits vortex. Cet échange de fluide entraîne une diminution importante et rapide de la circulation dans chaque vortex et ainsi une désintégration ou destruction de ladite paire de vortex contrarotatifs.

Par conséquent, le procédé conforme à la présente invention permet de réduire la durée de vie desdits vortex contrarotatifs et ainsi de remédier aux inconvénients précités.

Bien que non exclusivement, la présente invention s'applique plus particulièrement à un avion. Dans ce cas, les deux surfaces portantes d'une aile, qui engendrent respectivement lesdits tourbillons co-rotatifs, sont en général, d'une part la surface d'extrémité de l'aile et, d'autre part, un volet déployé. Toutefois, la présente invention peut également s'appliquer à d'autres mobiles et en particulier à un sous-marin, pour lequel des vortex sont créés dans le sillage de ses ailerons.

De façon avantageuse, on détermine ledit mode d'instabilité du coeur à exciter, à partir de la taille des coeurs des tourbillons et des rapports entre les tailles des coeurs et la distance entre les tourbillons. De préférence, on détermine ledit mode d'instabilité de manière empirique. Généralement, la longueur d'onde du mode d'instabilité est sensiblement égale au diamètre moyen du coeur du tourbillon correspondant.

Par ailleurs, de façon avantageuse, la longueur d'onde d'une perturbation à engendrer :
- est de l'ordre d'un diviseur de la longueur d'onde la plus instable du mode d'instabilité qu'elle doit exciter, ce qui permet de réduire la taille des moyens utilisés pour engendrer ladite perturbation ; et/ou
- est située dans une bande d'instabilité de chacun des tourbillons co-rotatifs de l'aile correspondante.

La présente invention concerne également un dispositif pour accélérer la destruction d'une paire de vortex tels que ceux décrits précédemment.

Selon l'invention, ledit dispositif est remarquable en ce qu'il comporte, sur chacune desdites ailes, au moins un moyen de perturbation qui est agencé au voisinage de la zone de création de l'un desdits tourbillons co-rotatifs de l'aile, et en ce que chacun desdits moyens de perturbation est susceptible d'engendrer une perturbation périodique de l'écoulement, qui correspond à une instabilité de Bénard-von Kármán, et qui présente une longueur d'onde apte à exciter au moins l'un desdits modes d'instabilité du tourbillon correspondant de manière à augmenter le coeur du vortex contrarotatif qui est créé à partir de la fusion de ce tourbillon avec l'autre tourbillon co-rotatif de sorte que le diamètre dudit coeur devienne supérieur à une proportion prédéterminée de ladite distance inter-vortex.

De façon avantageuse, au moins l'un desdits moyens de perturbation comporte :
- dans un premier mode de réalisation, un élément non profilé, par exemple un cylindre, dont le diamètre apparent transversalement à l'écoulement dépend de la longueur d'onde de la perturbation périodique à engendrer ; et
- dans un second mode de réalisation, un moyen pour produire un jet de fluide émis transversalement audit écoulement. Si on émet ledit jet de fluide orthogonalement à l'écoulement, sa vitesse doit être au moins égale à celle du mobile et son diamètre du même ordre de grandeur que le diamètre apparent d'un élément non profilé, susceptible d'être utilisé à sa place.

Ainsi, le dispositif conforme à l'invention est de réalisation simple et peu coûteuse. De plus, il est passif et très robuste.

Par ailleurs, avantageusement, au moins l'un desdits moyens de perturbation est escamotable. A cet effet, ledit moyen de perturbation est, de préférence, rétractable à l'intérieur de l'aile ou de carénages montés sur l'aile (carénage de fin de mât par exemple) ou du volet. Ceci permet de ne pas augmenter la traînée et ainsi de ne pas diminuer les performances du mobile, en particulier en l'absence de vortex contrarotatifs, notamment en vol de croisière dans le cas d'un avion.

Les figures du dessin annexé feront bien comprendre comment l'invention peut être réalisée. Sur ces figures, des références identiques désignent des éléments semblables.

La figure 1 montre partiellement et schématiquement un avion, auquel on applique un dispositif conforme à l'invention.

Les figures 2 et 3 représentent respectivement deux modes de réalisation différents d'un moyen de perturbation d'un dispositif conforme à l'invention.

La figure 4 est un schéma synoptique montrant les étapes principales de l'accélération de la destruction des vortex, due à la mise en oeuvre du procédé conforme à l'invention.

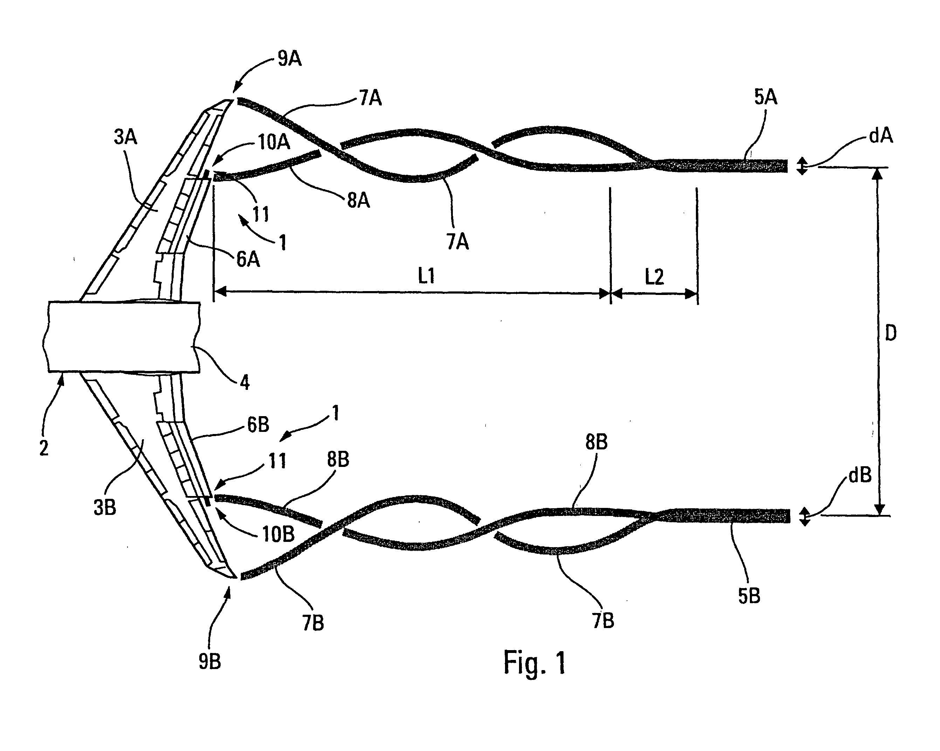

Le dispositif 1 conforme à l'invention et représenté schématiquement sur la figure 1 est monté sur un avion 2, en particulier un avion de transport, dont on a uniquement représenté les deux ailes 3A et 3B et une partie du fuselage 4, pour accélérer la destruction d'au moins deux vortex contrarotatifs 5A et 5B qui sont créés respectivement dans le sillage desdites ailes 3A et 3B et qui sont séparés l'un de l'autre d'une distance inter-vortex D (distance entre les centres des coeurs desdits vortex 5A et 5B).

On sait que le vortex 5A est formé à l'arrière de l'aile 3A par la fusion d'au moins deux tourbillons co-rotatifs 7A et 8A, dont l'un 7A est créé par l'extrémité 9A de l'aile 3A et l'autre 8A par l'extrémité dudit volet 6A déployé, chacun desdits tourbillons co-rotatifs 7A et 8A présentant une pluralité de modes d'instabilité du coeur, comme précisé ci-dessous. Lesdits tourbillons co-rotatifs 7A et 8A se maintiennent sur une distance L1, avant de fusionner sur une distance L2. De même, le vortex 5B est formé à l'arrière de l'aile 3B par la fusion d'au moins deux tourbillons co-rotatifs 7B et 8B, dont l'un 7B est créé par l'extrémité 9B de l'aile 3B et l'autre 8B par l'extrémité du volet 6B déployé.

Ces deux vortex contrarotatifs 5A et 5B, ou plus, qui sont créés dans le sillage de l'avion 2 peuvent être très énergétiques et produire un champ de vitesse très déstabilisateur pour un avion suiveur et, en particulier, un fort moment de roulis ainsi qu'un fort mouvement descendant de l'air. De plus, ils ont une durée de vie importante (plusieurs minutes), de sorte qu'ils imposent de grandes distances de séparation entre avions au voisinage des aéroports.

Selon l'invention, pour accélérer la destruction desdits vortex 5A et 5B, on engendre, au niveau de chacune desdites ailes 3A et 3B, au voisinage de la zone de création 10A, 10B d'au moins l'un 8A, 8B desdits tourbillons co-rotatifs 7A, 8A ; 7B, 8B de l'aile 3A, 3B, une perturbation périodique de l'écoulement. Chacune desdites perturbations périodiques présente une longueur d'onde qui est apte à exciter au moins l'un, mais de préférence une pluralité, des modes d'instabilité du tourbillon 8A, 8B correspondant de manière à augmenter le coeur du vortex contrarotatif 5A, 5B qui est créé à partir de la fusion instable de ce tourbillon 8A, 8B avec l'autre tourbillon 7A, 7B de sorte que le diamètre dA, dB dudit coeur devienne supérieur à une proportion prédéterminée (au moins égale à 0,3, de préférence) de ladite distance inter-vortex D. On parle de fusion "instable" pour souligner que la fusion, en présence d'instabilités du coeur, ne se déroule pas habituellement.

Pour ce faire, le dispositif 1 conforme à l'invention comporte sur chacune desdites ailes 3A, 3B, au moins un moyen de perturbation 11 ou 12 précisé ci-dessous, qui est agencé au voisinage de ladite zone de création 10A, 10B de l'un desdits tourbillons co-rotatifs 8A, 8B de l'aile 3A, 3B, c'est-à-dire au voisinage de l'extrémité du volet 6A, 6B dans l'exemple de la figure 1, et qui est susceptible d'engendrer ladite perturbation périodique de l'écoulement.

Le dispositif 1 conforme à l'invention engendre donc pour chaque vortex 5A, 5B, une perturbation qui présente une longueur d'onde précise et susceptible d'exciter le maximum de modes instables, en particulier de l'instabilité dite "elliptique", du tourbillon correspondant, par exemple du tourbillon 8A d'extrémité de volet 6A dans l'exemple de la figure 1 pour l'aile 3A. Cette perturbation fait osciller le coeur dudit tourbillon 8A et le rend instable. Ce dernier 8A présente alors des perturbations de sa structure interne.

Au fur et à mesure que la fusion de ce tourbillon 8A avec le tourbillon 7A (d'extrémité 9A d'aile 3A) s'effectue, ledit tourbillon 8A fortement perturbé contamine le tourbillon 7A. L'instabilité du tourbillon 8A modifie le processus de fusion des deux tourbillons 7A et 8A. En conséquence, le diamètre dA du vortex 5A résultant de la fusion instable de ces tourbillons 7A et 8A est plus grand et son niveau de turbulence interne est plus élevé qu'en absence d'instabilité.

Bien entendu, ce phénomène est le même pour le vortex 5B résultant de la fusion instable des deux tourbillons 7B et 8B formés sur l'autre aile 3B de l'avion 2.

On se trouve donc en présence de deux vortex 5A et 5B contrarotatifs de grands diamètres dA et dB, fortement perturbés. Comme déjà indiqué ci-dessus, à condition que ces diamètres dA et dB soient suffisamment grands [en d'autres termes, que les rapports dA/D et dB/D soient supérieurs à une valeur critique prédéfinie (par exemple 0,3) ou que dA et dB deviennent supérieurs à une proportion prédéterminée de la distance inter-vortex D], lesdites instabilités provoquent un échange de fluide entre les deux vortex 5A et 5B par la création de vortex secondaires non représentés à petite échelle qui sont perpendiculaires aux axes desdits vortex principaux 5A et 5B. Cette situation entraîne une désintégration rapide de la paire de vortex contrarotatifs 5A et 5B et une diminution rapide de la circulation de chaque vortex 5A, 5B. En d'autres termes, les vortex 5A et 5B sont ainsi beaucoup plus rapidement détruits qu'en l'absence d'instabilité.

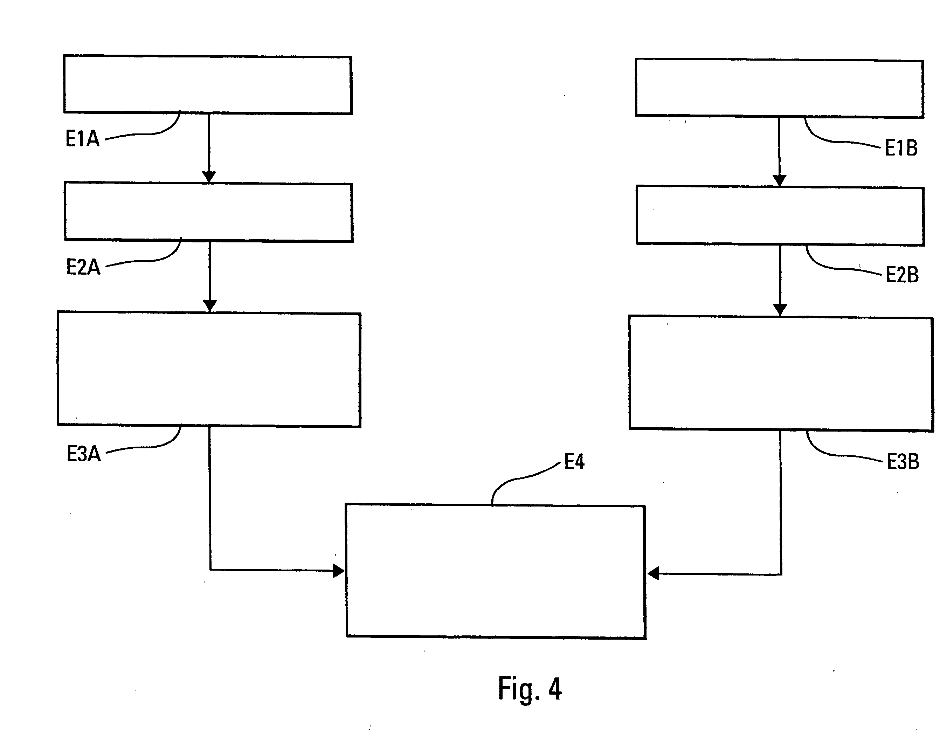

Sur la figure 4, on a représenté les principales étapes du processus décrit précédemment, conduisant à la destruction accélérée des vortex 5A et 5B de la figure 1, grâce à l'action du dispositif 1 conforme à l'invention. Ce processus comprend les étapes suivantes (la lettre A illustrant un phénomène ou une étape ayant lieu au niveau de l'aile 3A et la lettre B illustrant le même phénomène ayant lieu au niveau de l'aile 3B) :
- en E1A et E1B, sont indiquées les perturbations périodiques précitées engendrées par l'action du dispositif 1, qui correspondent chacune à une instabilité connue sous l'expression d"'instabilité de Bénard-von Kármán" ;
- en E2A et E2B, des instabilités tridimensionnelles du coeur, en particulier des "instabilités elliptiques", existant dans les tourbillons 8A et 8B sont accrues par les perturbations périodiques engendrées conformément à l'invention.

On sait que ces instabilités tridimensionnelles se développent dans un tourbillon soumis à un étirement. Ceci arrive dans le cas de paires de tourbillons co-rotatifs (ou contrarotatifs), l'étirement sur chaque tourbillon étant induit par la présence de l'autre tourbillon, ce qui rend instable ledit tourbillon. L'instabilité qui s'ensuit produit des perturbations de la structure interne du tourbillon, avec une longueur d'onde axiale caractéristique de l'ordre du diamètre du coeur du tourbillon. L'instabilité elliptique a été mise en évidence :
- pour les tourbillons contrarotatifs, par Leweke T. et Williamson C.H.K. dans un article intitulé "Cooperative elliptic instability of a vortex pair" et paru dans la publication "J. Fluid Mech", vol. 360, p. 85-119 ; et
- pour les tourbillons co-rotatifs, par Meunier P., Leweke T. et Abid M. dans un article intitulé "Three-dimensional instability of two merging vortices" et paru dans la publication "Advances in Turbulence VIII", CIMNE, p. 15-18.

L'instabilité elliptique modifie de façon importante l'évolution à long terme des paires de tourbillons, tant pour les tourbillons co-rotatifs que pour les tourbillons contrarotatifs.

Le phénomène principal dans l'interaction des tourbillons co-rotatifs (7A et 8A d'une part, 7B et 8B d'autre part) est la fusion des deux tourbillons en un seul vortex 5A, 5B, dès que les rayons des coeurs de ces tourbillons co-rotatifs, qui augmentent au cours du temps par diffusion visqueuse ou turbulente de la vorticité, dépassent une fraction critique de la distance entre les centres des coeurs de ces tourbillons ;
- ces fusions, entre 7A et 8A d'une part et entre 7B et 8B d'autre part, sont réalisées respectivement aux étapes E3A et E3B.
   En raison des instabilités (qui ont été amplifiées conformément à l'invention) des tourbillons 8A et 8B, les vortex 5A et 5B qui sont créés par ces fusions instables présentent des diamètres dA et dB plus importants et des niveaux de turbulence interne plus élevés, qu'en l'absence d'amplification.
   Selon l'invention, ces diamètres dA et dB sont supérieurs à une proportion déterminée (par exemple 0,3) de la distance inter-vortex D ; et
- grâce à l'obtention de diamètres dA et dB vérifiant de telles tailles, le régime non linéaire de l'instabilité entre vortex contrarotatifs provoque (étape E4) un échange de fluide entre les deux vortex 5A et 5B par la création de vortex secondaires à petite échelle, qui sont perpendiculaires aux axes des tourbillons principaux. Cette situation entraîne rapidement une désintégration de la paire initiale de vortex 5A et 5B par un mouvement turbulent du fluide à petite échelle et une diminution importante et rapide de la circulation de chaque vortex. Les vortex 5A et 5B sont donc détruits plus rapidement.

Selon l'invention, les modes d'instabilité des tourbillons co-rotatifs 8A et 8B, que l'on veut exciter, sont déterminés à partir de la théorie d'instabilité connue, partiellement présentée ci-dessus, qui a été confirmée par des simulations et des expérimentations. On notera que les paramètres déterminant les modes d'instabilité sont essentiellement la taille (diamètre) des coeurs des tourbillons 7A, 7B, 8A, 8B avant fusion et le rapport taille du coeur / distance entre ces tourbillons. La variation du nombre de Reynolds (exprimant l'effet de la viscosité du fluide) n'a pratiquement pas d'effet dans les situations appliquées à un avion.

De plus, les longueurs d'onde les plus instables des modes d'instabilité peuvent être déterminées par la théorie de l'instabilité elliptique, à partir des paramètres ci-dessus. Cependant, ces prévisions donnent seulement un ordre de grandeur pour la situation considérée. Les longueurs d'onde les plus instables sont de l'ordre du diamètre moyen du coeur du tourbillon correspondant. Les valeurs précises dans la situation considérée doivent être trouvées empiriquement. Les perturbations à engendrer doivent avoir des longueurs d'onde proches de celle du mode d'instabilité, ou bien proches d'un diviseur de celle-ci.

De plus, selon l'invention, la longueur d'onde d'une perturbation à engendrer est située dans une bande d'instabilité de chacun des tourbillons co-rotatifs de l'aile correspondante.

Comme indiqué précédemment, le dispositif 1 conforme à l'invention comporte au moins deux moyens de perturbation qui peuvent être réalisés chacun selon différents modes de réalisation 11, 12.

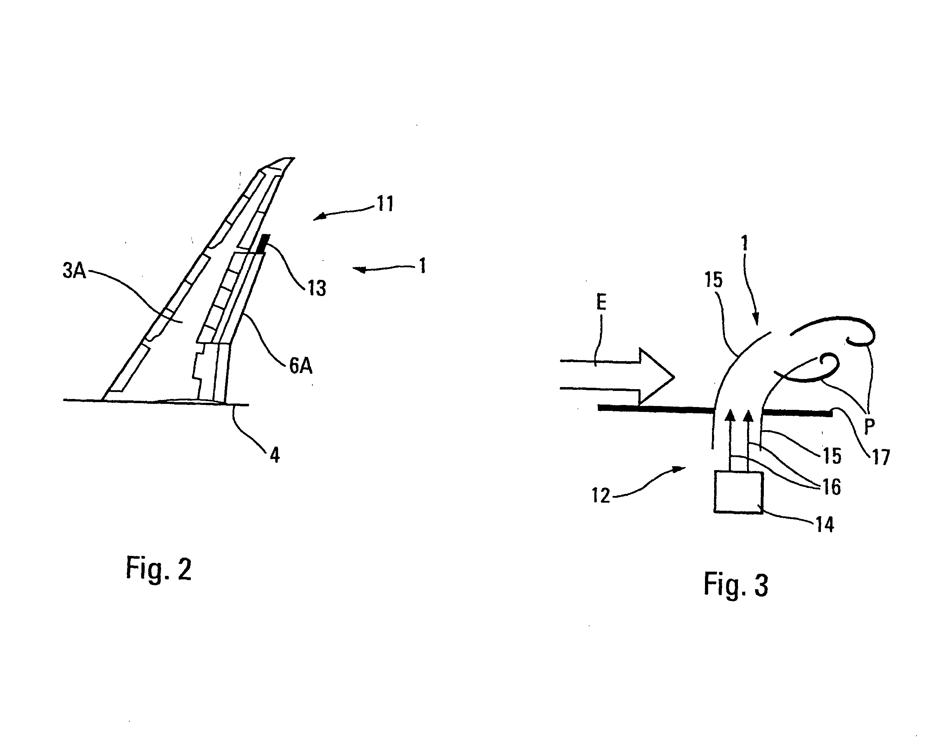

Dans un premier mode de réalisation illustré sur la figure 2, ledit moyen de perturbation 11 comporte un élément non profilé 13, dont le diamètre "apparent" ou "effectif", transversalement à l'écoulement, dépend de la longueur d'onde de la perturbation périodique à engendrer.

De préférence, cet élément non profilé 13 est un cylindre, par exemple de section circulaire, comme représenté sur la figure 2. Toutefois, ce cylindre peut également présenter une section elliptique ou même quelconque. Il peut également s'agir d'une plaque plane à forte incidence, par exemple inclinée à 45°.

La dimension transverse (ou largeur) "effective" de l'élément 13 détermine donc la longueur d'onde de la perturbation engendrée. Cette largeur "effective" dépend du degré de déviation des lignes de courant par l'élément 13. Elle n'est pas forcément identique à la dimension réelle de l'élément 13. Par exemple, une plaque plane, perpendiculaire à l'écoulement, dévie les lignes de courant beaucoup plus qu'un cylindre de même diamètre. De plus, la relation entre dimension "effective" et longueur d'onde du sillage engendrée est connue pour un certain nombre d'éléments de façon purement empirique : il n'existe pas de résultat théorique. La longueur d'onde est de l'ordre de plusieurs fois la largeur "effective" de l'élément. Donc, on peut avoir une idée approximative de la dimension de l'élément 13 par avance, mais pour chaque forme envisagée, la relation doit à nouveau être trouvée empiriquement.

Dans le cadre de la présente invention, ledit élément 13 peut donc correspondre à tout élément (non profilé) permettant d'engendrer la perturbation périodique précitée de l'écoulement.

De plus, cet élément 13 est escamotable. A cet effet, il est de préférence rétractable à l'intérieur de l'aile 3A, 3B ou du volet 6A, 6B ou des carénages existants à proximité desquels il est prévu, à l'aide de moyens de rétraction usuels non représentés. Ceci permet de ne pas augmenter la traînée et ainsi de ne pas diminuer les performances de l'avion 2, notamment en vol de croisière.

Dans un second mode de réalisation représenté schématiquement sur la figure 3, ledit moyen de perturbation 12 comporte un moyen 14 de type usuel, pour produire un jet de fluide 15, comme illustré par des flèches 16. Ce jet de fluide 15 est émis transversalement à l'écoulement E de manière à engendrer la perturbation P conforme à l'invention, comme représenté partiellement. Si on émet ledit jet de fluide 15 orthogonalement à l'écoulement E, sa vitesse doit être au moins égale à celle de l'avion 2 et son diamètre du même ordre de grandeur que le diamètre apparent d'un élément 13 non profilé, susceptible d'être utilisé à sa place.

De préférence, ledit moyen 14 est agencé à l'intérieur de la structure 17 existant à proximité de ladite zone de création 10A, 10B, par exemple à l'intérieur du volet 6A, 6B ou de l'aile 3A, 3B. Si cela n'est pas le cas, ledit moyen 14 peut également être escamotable.

Comme indiqué précédemment, le moyen de perturbation 11, 12 doit être choisi de façon à produire une perturbation avec une longueur d'onde susceptible d'exciter le maximum de modes instables de l'instabilité elliptique des tourbillons co-rotatifs.

A titre d'illustration, un exemple de diamètre (transverse) apparent ou effectif (il peut s'agir du diamètre apparent de l'élément non profilé 13, comme du "diamètre apparent" du jet de fluide 15) est de l'ordre de 10 cm engendrant une perturbation ayant une longueur d'onde d'environ 50 cm. Un rayon représentatif du tourbillon d'extrémité d'aile ou de volet avant fusion peut être de l'ordre de 1 mètre (m), donnant une longueur d'onde maximale de l'instabilité elliptique de l'ordre de 3 m, à laquelle s'ajoute une multitude de longueurs d'ondes inférieures instables. La perturbation engendrée par le dispositif 1 est capable d'exciter les modes qui ont la même longueur d'onde, mais aussi toutes celles proches des multiples. Dans l'exemple considéré, la perturbation créée par le dispositif 1 exciterait les modes de longueurs d'onde 50 cm, 1 m, etc ..., jusqu'à 3 m (au-delà, les tourbillons sont stables), donc au total un maximum de six modes instables.

On notera que le dispositif 1 conforme à l'invention comporte au moins un moyen de perturbation 11, 12 par vortex 5A, 5B. Bien entendu, il peut également en comporter deux (ou plus), l'un agissant alors sur le tourbillon d'extrémité d'aile et l'autre sur le tourbillon d'extrémité de volet. Lorsqu'il n'en comporte qu'un seul par vortex, de préférence mais non exclusivement, ce moyen de perturbation agit sur le tourbillon 8A, 8B d'extrémité de volet 6A, 6B, qui est plus énergétique en raison d'une distribution de portance différente et plus favorable à la génération de tourbillon que le tourbillon 7A, 7B d'extrémité 9A, 9B d'aile 3A, 3B.

Ledit dispositif 1 peut bien entendu être utilisé pour accélérer la destruction d'un nombre de vortex supérieur à deux, en prévoyant un nombre approprié de moyens de perturbation 11, 12.

On notera par ailleurs que ledit dispositif 1 conforme à l'invention est passif, simple, robuste et peu coûteux.

La présente invention peut être appliquée à tout mobile comportant des vortex dans le sillage de ses ailes (au sens large), et en particulier à un sous-marin afin de rendre sa détection, notamment par satellite, plus difficile.

## Revendications

1. Procédé pour accélérer la destruction d'au moins deux vortex contrarotatifs (5A, 5B) qui sont créés respectivement dans le sillage des ailes (3A, 3B) d'un mobile (2) muni d'au moins deux ailes (3A, 3B), dont chaque aile (3A, 3B) est pourvue d'au moins deux surfaces portantes (3A, 6A ; 3B, 6B), et qui sont séparés l'un de l'autre d'une distance inter-vortex (D), chacun desdits vortex contrarotatifs (5A, 5B) étant formé à l'arrière de l'aile correspondante (3A, 3B) par la fusion d'au moins deux tourbillons co-rotatifs (7A, 8A ; 7B, 8B) qui sont créés respectivement par la disposition desdites surfaces portantes (3A, 3B, 6A, 6B) de l'aile (3A, 3B), chacun desdits tourbillons co-rotatifs présentant une pluralité de modes d'instabilité du coeur,
**caractérisé en ce que** l'on engendre, au niveau de chacune desdites ailes (3A, 3B), au voisinage de la zone de création (10A, 10B) d'au moins l'un desdits tourbillons co-rotatifs (8A, 8B) de l'aile, une perturbation périodique de l'écoulement, qui correspond à une instabilité de Bénard-von Kármán, et **en ce que** chacune desdites perturbations périodiques présente une longueur d'onde qui est apte à exciter au moins l'un desdits modes d'instabilité du tourbillon correspondant (8A, 8B) de manière à augmenter le coeur du vortex contrarotatif (5A, 5B) qui est créé à partir de la fusion instable de ce tourbillon (8A, 8B) avec l'autre tourbillon (7A, 7B) de sorte que le diamètre (dA, dB) dudit coeur devienne supérieur à une proportion prédéterminée de ladite distance inter-vortex (D).

2. Procédé selon la revendication 1,
**caractérisé en ce que** l'on détermine ledit mode d'instabilité à exciter, à partir de la taille des coeurs des tourbillons (7A, 7B, 8A, 8B) et des rapports entre les tailles des coeurs et la distance entre les tourbillons.

3. Procédé selon l'une des revendications 1 et 2,
**caractérisé en ce que** la longueur d'onde du mode d'instabilité est sensiblement égale au diamètre moyen du coeur du tourbillon correspondant (8A, 8B).

4. Procédé selon l'une des revendications 1 à 3,
**caractérisé en ce que** la longueur d'onde d'une perturbation périodique à engendrer est de l'ordre d'un diviseur de la longueur d'onde la plus instable du mode d'instabilité, qu'elle doit exciter.

5. Procédé selon l'une quelconque des revendications 1 à 4, **caractérisé en ce que** la longueur d'onde d'une perturbation périodique à engendrer est située dans une bande d'instabilité de chacun des tourbillons co-rotatifs (7A, 8A ; 7B, 8B) de l'aile correspondante (3A, 3B).

6. Dispositif pour un mobile (2) muni d'au moins deux ailes (3A, 3B), dont chaque aile (3A, 3B) est pourvue d'au moins deux surfaces portantes (3A, 6A ; 3B, 6B), pour accélérer la destruction d'une paire de vortex contrarotatifs (5A, 5B) qui sont créés respectivement dans le sillage desdites ailes (6A, 6B) du mobile (2) et qui sont séparés l'un de l'autre d'une distance inter-vortex (D), chacun desdits vortex contrarotatifs (5A, 5B) étant formé à l'arrière de l'aile correspondante par la fusion d'au moins deux tourbillons co-rotatifs (7A, 8A ; 7B, 8B) qui sont créés respectivement par la disposition desdites surfaces portantes (3A, 3B, 6A, 6B), chacun desdits tourbillons co-rotatifs présentant une pluralité de modes d'instabilité,
**caractérisé en ce qu'**il comporte, sur chacune desdites ailes (3A, 3B), au moins un moyen de perturbation (11, 12) qui est agencé au voisinage de la zone de création (10A, 10B) de l'un desdits tourbillons co-rotatifs de l'aile, et **en ce que** chacun desdits moyens de perturbation (11, 12) est susceptible d'engendrer une perturbation périodique de l'écoulement, qui correspond à une instabilité de Bénard-von Kármán, et qui présente une longueur d'onde apte à exciter au moins l'un desdits modes d'instabilité du tourbillon correspondant (8A, 8B) de manière à augmenter le coeur du vortex contrarotatif (5A, 5B) qui est créé à partir de la fusion instable de ce tourbillon (8A, 8B) avec l'autre tourbillon (7A, 7B) de sorte que le diamètre (dA, dB) dudit coeur devienne supérieur à une proportion prédéterminée de ladite distance inter-vortex (D).

7. Dispositif selon la revendication 6,
**caractérisé en ce qu'**au moins l'un (11) desdits moyens de perturbation comporte un élément non profilé (13), dont le diamètre apparent transversalement à l'écoulement dépend de la longueur d'onde de la perturbation périodique à engendrer.

8. Dispositif selon l'une quelconque des revendications 6 et 7, **caractérisé en ce qu'**au moins l'un (12) desdits moyens de perturbation comporte un moyen (14) pour produire un jet de fluide (15) émis transversalement audit écoulement (E).

9. Dispositif selon l'une quelconque des revendications 6 à 8, **caractérisé en ce qu'**au moins l'un desdits moyens de perturbation (11, 12) est escamotable.

## Patentansprüche

1. Verfahren zur Beschleunigung der Zerstörung von zumindest zwei gegenläufigen Wirbelschleppen (5a, 5B), die im Sog der Flügel (3A, 3B) eines in Bewegung befindlichen, mindestens mit zwei Flügeln (3A, 3B) versehenen Körpers (2) erzeugt werden, von dem jeder Flügel (3A, 3B) mit mindestens zwei tragenden Flächen (3A, 6A; 3B, 6B) versehen ist, und die durch einen Wirbelschleppenzwischenabstand (D) voneinander getrennt sind, wobei jeder der genannten gegenläufigen Wirbelschleppen (5A, 5B) am hinteren Teil des entsprechenden Flügels (3A, 3B) durch Verschmelzung von mindestens zwei Wirbeln mit gleichem Drehsinn (7A, 8A; 7B, 8B) gebildet wird, die jeweils durch die Anordnung der tragenden Flächen (3A, 6A; 3B, 6B) des Flügels (3A, 3B) erzeugt werden, wobei jeder Wirbel mit gleichem Drehsinn mehrere Arten Keminstabilität aufweist,
**dadurch gekennzeichnet, dass** an jedem Flügel (3A, 3B) in der Nähe des Bereichs (10A, 10B), in dem mindestens einer der genannten Wirbel mit gleichem Drehsinn (8A, 8B) des Flügels gebildet wird, eine periodische Störung der Strömung erzeugt wird, die einer Benardvon-Kármán-Instabilität entspricht, und dadurch, dass jede periodische Störung eine Wellenlänge hat, die mindestens eine der genannten Instabilitätsarten des entsprechenden Wirbels (8A, 8B) auslösen kann, sodass der Kern der gegenläufigen Wirbelschleppe (5A, 5B), der durch die instabile Verschmelzung dieses Wirbels (8A, 8B) mit dem anderen Wirbel (7A, 7B) entsteht, vergrößert wird, sodass der Durchmesser (dA, dB) des Kems größer als ein vorher bestimmtes Verhältnis des Abstands zwischen den Wirbelschleppen (D) wird.

2. Verfahren nach Anspruch 1,
**dadurch gekennzeichnet, dass** die auszulösenden Instabilitätsart ausgehend von der Größe der Kerne der Wirbel (7A, 7B, 8A, 8B) und den Verhältnissen zwischen den Größen der Kerne und dem Abstand zwischen den Wirbeln ermittelt wird.

3. Verfahren nach einem der Ansprüche 1 und 2,
**dadurch gekennzeichnet, dass** die Wellenlänge der Instabilitätsart im Wesentlichen gleich dem mittleren Durchmesser des Kems des entsprechenden Wirbels (8A, 8B) ist.

4. Verfahren nach einem der Ansprüche 1 bis 3,
**dadurch gekennzeichnet, dass** die Wellenlänge einer zu erzeugenden periodischen Störung in der Größenordnung eines Divisors der instabilsten Wellenlänge der instabilitätsart liegt, die sie erzeugen soll.

5. Verfahren nach einem der Ansprüche 1 bis 4,
**dadurch gekennzeichnet, dass** die Wellenlänge einer zu erzeugenden periodischen Störung in einem Instabilitätsband jedes Wirbels mit gleichem Drehsinn (7A, 8A; 7B, 8B) des entsprechenden Flügels (3A, 3B) liegt.

6. Eine Vorrichtung für einen in Bewegung befindlichen Körper (2) mit mindestens zwei Flügeln (3A, 3B), von denen jeder Flügel (3A, 3B) mit mindestens zwei tragenden Flächen (3A, 6A; 3B, 6B) versehen ist, zur Beschleunigung der Zerstörung eines Paars gegenläufiger Wirbelschleppen (5A, 5B), die jeweils im Sog der Flügel (6A, 68) des in Bewegung befindlichen Körpers (2) erzeugt werden und durch einen Abstand zwischen den Wirbelschleppen (D) voneinander getrennt sind, wobei jede gegenläufige Wirbelschleppe (5A, 5B) am hinteren Teil des entsprechenden Flügels durch Verschmelzung von mindestens zwei Wirbeln mit gleichem Drehsinn (7A, 8A; 7B, 8B) gebildet wird, die jeweils durch die Anordnung der tragenden Flächen (3A, 6A; 3B, 6B) erzeugt werden, wobei jeder Wirbel mit gleichem Drehsinn mehrere Instabilitätsarten aufweist,
**dadurch gekennzeichnet, dass** sie an jedem der genannten Flügel (3A, 3B) mindestens ein Störmittel (11,12) besitzt, das in der Nähe des Bereichs (10A, 10B) angeordnet ist, in dem einer der Wirbel mit gleichem Drehsinn des Flügels erzeugt wird, und dadurch, dass jedes Störmittel (11, 12) eine periodische Störung der Strömung erzeugen kann, die einer Bénardvon-Kármán-Instabilität entspricht und eine Wellenlänge besitzt, die mindestens eine der Instabilitätsarten des entsprechenden Wirbels (8A, 8B) auslösen kann, sodass der Kern der gegenläufigen Wirbelschleppe (5A, 5B), der durch die instabile Verschmelzung dieses Wirbels (8A, 8B) mit dem anderen Wirbel (7A, 7B) entsteht, vergrößert wird, sodass der Durchmesser (dA, dB) des Kerns größer als ein vorher bestimmtes Verhältnis des Abstands zwischen den Wirbelschleppen (D) wird.

7. Vorrichtung gemäß Anspruch 6,
**dadurch gekennzeichnet, dass** mindestens eines (11) der Störmittel ein nicht profiliertes Element (13) umfasst, dessen scheinbarer Durchmesser quer zur Strömung von der Wellenlänge der zu erzeugenden periodischen Störung abhängt.

8. Vorrichtung nach einem beliebigen der Ansprüche 6 und 7,
**dadurch gekennzeichnet, dass** mindestens eines (12) der Störmittel ein Mittel (14) zur Erzeugung eines Medienstrahls (15) umfasst, der quer zur genannten Strömung (E) abgegeben wird.

9. Vorrichtung nach einem beliebigen der Ansprüche 6 bis 8,
**dadurch gekennzeichnet, dass** mindestens eines der Störmittel (11, 12) einklappbar ist.

## Claims

1. Process for accelerating the destruction of at least two contra-rotating vortices (5A, 5B) which are created, respectively, in the wake of the wings (3A, 3B) of a moving body (2) having at least two wings (3A, 3B), where each wing (3A, 3B) has at least two lifting surfaces (3A, 6A; 3B, 6B), and which are separated from each other by an inter-vortex distance (D), each of the said contra-rotating vortices (5A, 5B) being formed at the rear of the corresponding wing (3A, 3B) by the merging of at least two co-rotating eddies (7A, 8A; 7B, 8B) which are created by the arrangement of the said lifting surfaces (3A, 3B, 6A, 6B) of the wing (3A, 3B), each of the said co-rotating eddies having a plurality of core instability modes,
**characterized in that** a periodic perturbation of the flow, which corresponds to a Bénard-von-Kármán instability, is generated on each of the said wings (3A, 3B), in the vicinity of the area (10A, 10B) of creation of at least one of the said co-rotating eddies (8A, 8B) associated with the wing, and **in that** each of the said periodic perturbations has a wavelength capable of exciting at least one of the said instability modes of the corresponding eddy (8A, 8B) in such a way as to increase the core of the contra-rotating vortex (5A, 5B) which is created by the unstable merging of this eddy (8A, 8B) with the other eddy (7A, 7B), so that the diameter (dA, dB) of the said core becomes greater than a predetermined proportion of the said inter-vortex distance (D).

2. Process according to Claim 1, **characterized in that** the said instability mode to be excited is determined from the sizes of the cores of the eddies (7A, 7B, 8A, 8B) and from the ratios between the core sizes and the distance between the eddies.

3. Process according to either of Claims 1 and 2, **characterized in that** the wavelength of the instability mode is essentially equal to the mean diameter of the core of the corresponding eddy (8A, 8B).

4. Process according to one of Claims 1 to 3, **characterized in that** the wavelength of a periodic perturbation to be generated is of the order of a divisor of the most unstable wavelength of the instability mode which it is to excite.

5. Process according to any one of Claims 1 to 4, **characterized in that** the wavelength of a periodic perturbation to be generated is located within an instability range of each of the co-rotating eddies (7A, 8A; 7B, 8B) of the corresponding wing (3A, 3B).

6. Device for a moving body (2) having at least two wings (3A, 3B), where each wing (3A, 3B) has at least two lifting surfaces (3A, 6A; 3B, 6B), 'for accelerating the destruction of a pair of contra-rotating vortices (5A, 5B) which are created, respectively, in the wake of the said wings (6A, 6B) of the moving body (2) and which are separated from each other by an inter-vortex distance (D), each of the said contra-rotating vortices (5A, 5B) being formed at the rear of the corresponding wing by the merging of at least two co-rotating eddies (7A, 8A; 7B, 8B) which are created, respectively, by the arrangement of the said lifting surfaces (3A, 3B, 6A, 6B), each of the said co-rotating eddies having a plurality of instability modes,
**characterized in that** it comprises, on each of the said wings (3A, 3B), at least one perturbation means (11, 12) which is positioned in the vicinity of the area (10A, 10B) of creation of one of the said co-rotating eddies associated with the wing, and **in that** each of the said perturbation means (11, 12) can generate a periodic perturbation of the flow, which corresponds to a Bénard-von-Kármán instability and which has a wavelength capable of exciting at least one of the said instability modes of the corresponding eddy (8A, 8B) in such a way as to increase the core of the contra-rotating vortex (5A, 5B) which is created by the unstable merging of this eddy (8A, 8B) with the other eddy (7A, 7B) in such a way that the diameter (dA, dB) of the said core becomes greater than a predetermined proportion of the said inter-vortex distance (D).

7. Device according to Claim 6, **characterized in that** at least one (11) of the said perturbation means comprises an unstreamlined element (13), whose apparent diameter which is transverse with respect to the flow depends on the wavelength of the periodic perturbation to be generated.

8. Device according to either one of Claims 6 and 7, **characterized in that** at least one (12) of the said perturbation means comprises a means (14) for producing a jet of fluid (15) emitted transversely with respect to the said flow (E).

9. Device according to any one of Claims 6 to 8, **characterized in that** at least one of the said perturbation means (11, 12) is retractable.
